**Europäisches Patentamt**

**European Patent Office**

**Office européen des brevets**

(19)

(11) Veröffentlichungsnummer: **0 058 312**

**A1**

(12)

# EUROPÄISCHE PATENTANMELDUNG

(21) Anmeldenummer: 82100438.9

(22) Anmeldetag: 22.01.82

(51) Int. Cl.³: **B 60 Q 1/06**
**B 60 Q 1/04**

(30) Priorität: 18.02.81 DE 3105925

(43) Veröffentlichungstag der Anmeldung:
25.08.82 Patentblatt 82/34

(84) Benannte Vertragsstaaten:
FR GB IT NL SE

(71) Anmelder: Westfälische Metall Industrie KG Hueck &
Co.
Postfach 28 40
D-4780 Lippstadt(DE)

(72) Erfinder: Ernst, Hans-Otto, Dr. Dipl.-Ing.
Schückingstrasse 10
D-4780 Lippstadt(DE)

(72) Erfinder: Freudenreich, Erwin, Ing. grad.
Schultenstrasse 13
D-4780 Lippstadt(DE)

(72) Erfinder: Kathmann, Franz
Robert-Koch-Strasse 36
D-4780 Lippstadt(DE)

(54) Fahrzeugscheinwerfer.

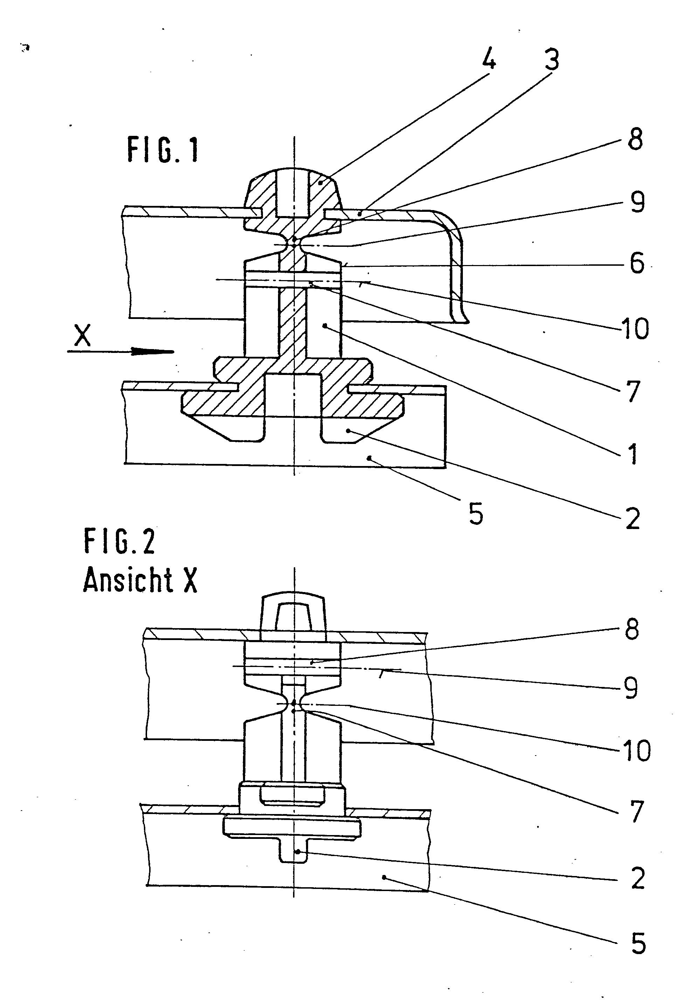

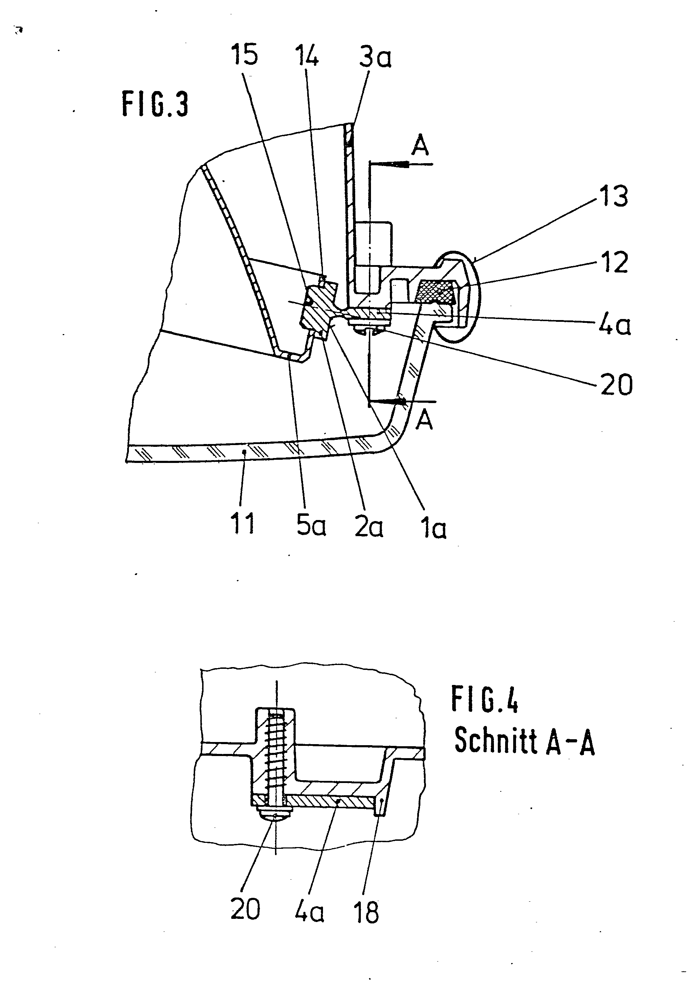

(57) Die Erfindung betrifft einen Fahrzeugscheinwerfer, dessen Reflektor mit Tragring (5) um zwei senkrecht zueinander verlaufende Achsen (9 und 10) verschwenkbar ist. Beide Achsen gehen durch ein ortsfest angeordnetes Gelenkstück (1) hindurch. Das einteilige und aus elastischem Kunststoff bestehende Gelenkstück (1) ist, wie in Figur 1 der Zeichnung dargestellt, mit dem Tragring (5) des Reflektors und dem Aufnahmeteil (3) verbunden. Dieses Gelenkstück (1) weist zwei scharnierartige Gelenke (7 und 8) auf, deren Schwenkachsen (9 und 10) rechtwinklig zueinander verlaufen. Dadurch ist der Reflektor mit Tragring (5) um die zwei Schwenkachsen (9 und 10) kontinuierlich und ruckfrei verschwenkbar.

FIG. 1

EP 0 058 312 A1

– 1 –

Fahrzeugscheinwerfer.

Die Erfindung bezieht sich auf einen Fahrzeugscheinwerfer, dessen Reflektor um zwei senkrecht zueinander verlaufende Achsen verstellbar ist, wobei beide Achsen durch ein ortsfest angeordnetes Gelenkstück hindurchgehen und dieses Gelenkstück von einem einteiligen, elastischen Kunststoffteil gebildet wird, das den Reflektor in mindestens zwei Richtungen verschwenkbar mit einem feststehenden Aufnahmeteil verbindet.

Bei den bekannten Fahrzeugscheinwerfern dieser Art ist der einteilige, aus Kunststoff hergestellte Festpunkt relativ starr ausgebildet. Ein Verschwenken des Reflektors erfolgt hierbei unter Deformation des Reflektors und der ihn tragenden Elemente unter Anwendung großer Verstellkräfte. Dieser starr ausgebildete Festpunkt ist nachteilig, da er bei Verwendung einer Leuchtweiteregelung nicht anwendbar ist. Hierbei muß die Verstellung leichtgängig, ruckfrei und kontinuierlich durchgeführt werden können.

Bei anderen mit z. B. Kugelgelenken versehenen Festpunkten ergibt sich durch ihre Zweiteiligkeit eine aufwendige Montage. Es ist schwierig, das Gelenk so einzustellen, daß es weder zu leicht- noch zu schwergängig ist. Außerdem kann sich bei größeren Erschütterungen die Gelenkverbindung lösen.

Aufgabe der Erfindung ist es, einen einteilig aus Kunststoff hergestellten Festpunkt derart auszubilden, daß eine leichte, ruckfreie und kontinuierliche Verschwenkbarkeit des Reflektors gewährleistet ist. Darüber hinaus soll der Festpunkt einfach und leicht herstellbar und montierbar sein. Diese Aufgabe wird erfindungsgemäß dadurch gelöst, daß das an das Aufnahmeteil angreifende, ortsfeste Befestigungselement des Gelenkstückes und das einen Abstand dazu aufweisende am Reflektor angreifende, bewegliche Befestigungselement des Gelenkstückes durch wenigstens zwei scharnierartige Gelenke miteinander beweglich verbunden sind, deren Schwenkachsen rechtwinklig zueinander verlaufen, und daß die Gelenke durch Sollbiegestellen mit einem rechteckigen Querschnitt gebildet sind, wobei die Längsseiten des Querschnitts parallel zur jeweiligen Schwenkachse verlaufen.

Bei einer vorteilhaften Ausbildungsform der Erfindung sind die rechtwinklig zueinander verlaufenden Schwenkachsen in einem Abstand zueinander angeordnet, wobei das ortsfeste und das bewegliche Befestigungselement durch einen zylindrischen Block verbunden sind, der im mittleren Abschnitt zwei im Abstand zueinander angeordnete, im Querschnitt geschwächte Abschnitte aufweist, die die scharnierartigen Gelenke bilden. Solche Gelenkstücke haben den Vorteil, daß sie einen von vorn auf die Streuscheibe ausgeübten Druck sehr gut aufnehmen, ohne daß die aus Reflektor und Streuscheibe bestehende optische Einheit eine Änderung ihrer Stellung erfährt.

Bei einer anderen vorteilhaften Ausführungsform der Erfindung weist die Verbindung des ortsfesten mit dem beweglichen Befestigungselement eine Abwinklung um 90° auf, und jeder Winkelschenkel weist einen Abschnitt mit geschwächtem Querschnitt auf, der rechteckig ausgebildet ist, und die Längsseiten der beiden rechteckigen Querschnitte verlaufen rechtwinklig zueinander. Ein solches Gelenkstück bietet insbesondere dann Vorteile, wenn der Einbauraum für die Scheinwerfer sehr eng ist.

Vorteilhafte Weiterbildungen, die in baulicher und herstellungstechnischer Hinsicht Vorteile ergeben, sind in den Unteransprüchen und in der nachfolgenden Beschreibung sowie Zeichnung dargestellt.

Die Zeichnung veranschaulicht drei Ausführungsbeispiele der Erfindung, und zwar zeigt

Figur 1 einen Teilschnitt durch einen Scheinwerfer im Bereich des Gelenkstückes,

Figur 2 eine Ansicht in Richtung X auf das Gelenkstück,

Figur 3 einen Teilschnitt durch einen Scheinwerfer mit einer anderen Ausführungsform des Gelenkstückes,

Figur 4 einen Schnitt nach der Linie A-A,

Figur 5 das Gelenkstück der Figur 3 als Einzelteil in der Draufsicht,

Figur 6 eine Ansicht aus der Richtung Y,

Figur 7 eine Seitenansicht einer weiteren Gelenkstückausführung und

Figur 8 das Gelenkstück der Figur 7 in der Draufsicht.

Die Figur 1 der Zeichnung zeigt einen Teilschnitt eines Scheinwerfers mit einem ortsfest angeordneten, einteiligen Gelenkstück 1, das aus Kunststoff hergestellt ist und mit seinem ortsfesten Befestigungselement 4 bajonettartig an dem Aufnahmeteil 3 befestigt ist. Das bewegliche Befestigungselement 2 des Gelenkstückes 1 ist ebenfalls bajonettartig an dem den optischen Block aufnehmenden Tragring 5 befestigt. Das ortsfeste und das bewegliche Befestigungselement sind durch einen zylindrischen, im Querschnitt kreuzförmigen Block 6 verbunden, der im mittleren Abschnitt zwei im Abstand zueinander angeordnete, im Querschnitt geschwächte Abschnitte 7 und 8 aufweist, die scharnierartige Gelenke bilden. Die Schwenkachsen 9 und 10 der beiden scharnierartigen Gelenke 7 und 8 verlaufen rechtwinklig zueinander und sind im eingebauten Zustand so ausgerichtet, daß sie in Richtung der jeweiligen Schwenkachse 9 bzw. 10 des Scheinwerfers verlaufen. Damit ist gewährleistet, daß ein Druck in Richtung der Längsachse auf das ortsfeste 4 und bewegliche Befestigungselement 2 des Gelenkstücks 1 gut ohne Deformation des Gelenkstücks aufgenommen wird, jedoch eine Verschwenkung zwischen dem ortsfesten und dem beweglichen Befestigungselement 2 und 4 sehr leicht möglich ist.

Der Bajonettverschluß des Gelenkstückes 1 am Tragring 5 ist im Durchmesser größer ausgebildet als am Aufnahmeteil 3. Bei der Montage des Gelenkstückes 1 in den Tragring 5 ist es von unten durch den Tragring 5 bis zum Anschlag einzuführen, und nach dem Aufsetzen des Aufnahmeteils 3 auf den optischen Block sind durch eine Drehung des Gelenkstückes 1 um 90° das Aufnahmeteil 3 und der Tragring 5 fest miteinander verbunden. Ein solches, leicht montierbares Gelenkstück 1 ist besonders vorteilhaft für eine Massenfertigung des Scheinwerfers.

In der Figur 3 ist eine andere Ausführungsform der Erfindung durch einen Teilschnitt eines Scheinwerfers dargestellt. Die das Innere des Scheinwerfers abdeckende Lichtscheibe 11 liegt an einer in das Aufnahmeteil 3 a eingelegten Dichtung 12 an. Die Lichtscheibe 11 und das Aufnahmeteil 3 a sind durch ihre Ränder umfassende C-förmige Federn 13 zusammengehalten. Der Reflektor 5 a und das Aufnahmeteil 3 a sind aus Kunststoff hergestellt und sind durch ein einteiliges, ebenfalls aus Kunststoff hergestelltes Gelenkstück 1 a miteinander verbunden. Der Reflektor 5 a ist um zwei senkrecht aufeinanderstehende Achsen 9 a, 10 a verschwenkbar, die beide durch das Gelenkstück 1 a hindurchgehen.

Das bewegliche Befestigungselement 2 a des Gelenkstückes 1 a ist als rechteckige Platte ausgebildet und liegt an einem den Reflektor 5 a umlaufenden Rand 14 an und durchdringt mit einem mittig angeformten, runden Ansatz 15 den Reflektorrand 14. Die rechteckige Platte 2 a ist mit zwei Nieten, die durch jeweils eine in den Endabschnitten der rechteckigen Platte 2 a eingebrachte Bohrung 15 hindurchgehen, an dem Reflektorrand 14 befestigt. Das bewegliche, als rechteckige Platte ausgebildete Befestigungselement 2 a ist mit dem ortsfesten Befestigungselement 4 a durch eine Abwinklung 17 von 90° verbunden. Dabei bildet ein freies Ende der Abwinklung das ortsfeste Befestigungselement 4 a, das in eine Vertiefung eines Ansatzes 18 des Aufnahmeteils eingesetzt und mit einer Schraube 20 an dem Ansatz 18 befestigt ist. Jeder Winkelschenkel der Abwinklung 17 des Gelenkstückes 1 weist einen Abschnitt 7 a bzw. 8 a mit geschwächtem, rechteckig ausgebildeten Querschnitt auf, dessen Längsseiten rechtwinklig zueinander und in Richtung der jeweiligen Schwenkachse 9 a bzw. 10 a verlaufen.

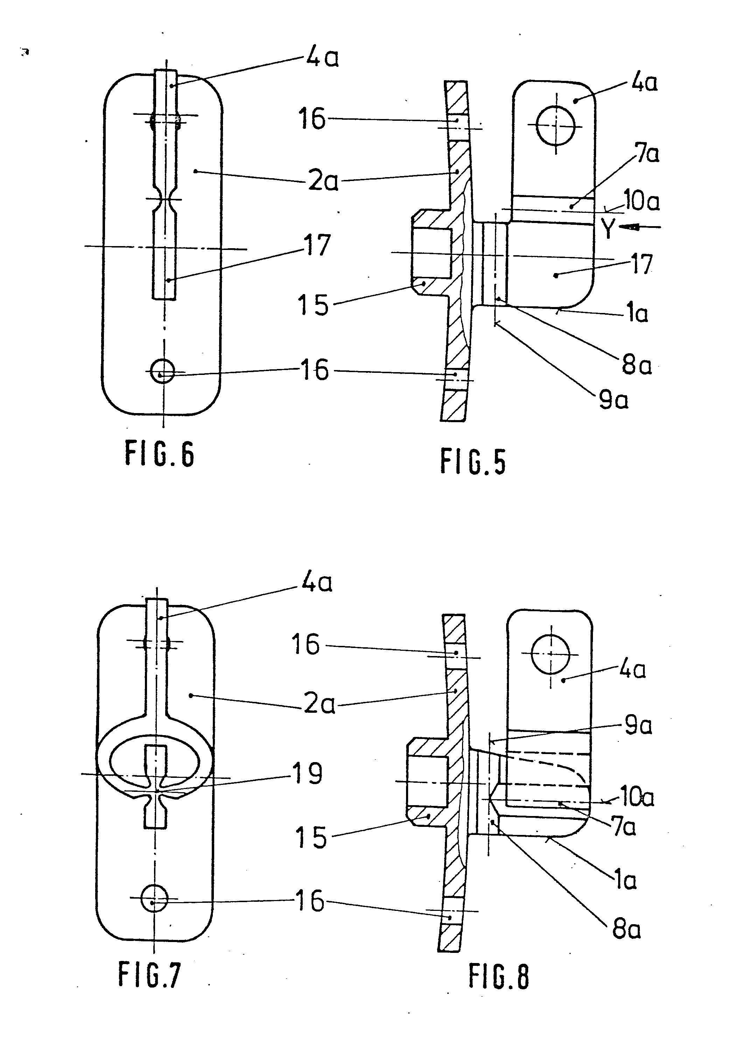

Figur 7 und 8 zeigen ein anderes Ausführungsbeispiel der Erfindung. Der Unterschied zu dem vorstehend beschriebenen Gelenkstück 1 a besteht darin, daß die Verbindung 19 der beiden Winkelschenkel der Abwinklung 17 kneifzangenartig ausgeführt und die Verbindung 19 beider Winkelschenkel im Querschnitt geschwächt ist.

Ein solches Gelenkstück ist bei Scheinwerfern mit Leuchtweiteregelung zu bevorzugen, da durch das häufige Verschwenken des Reflektors das scharnierartige Gelenk 7 a für die Höhenverstellung mehr beansprucht wird.

Patentansprüche:

1. Fahrzeugscheinwerfer, dessen Reflektor um zwei senkrecht zueinander verlaufende Achsen verstellbar ist, wobei beide Achsen durch ein ortsfest angeordnetes Gelenkstück hindurchgehen und dieses Gelenkstück von einem einteiligen, elastischen Kunststoffteil gebildet wird, das den Reflektor in mindestens zwei Richtungen verschwenkbar mit einem feststehenden Aufnahmeteil verbindet, dadurch gekennzeichnet,

daß das an das Aufnahmeteil (3, 3 a) angreifende, ortsfeste Befestigungselement (4, 4 a) des Gelenkstückes (1, 1 a) und das einen Abstand dazu aufweisende, am Reflektor (5 a) bzw. an seinem Tragring (5) angreifende, bewegliche Befestigungselement (2, 2 a) des Gelenkstückes (1, 1 a) durch wenigstens zwei scharnierartige Gelenke (7, 7 a und 8, 8 a) miteinander beweglich verbunden sind, deren Schwenkachsen (9, 9 a und 10, 10 a) rechtwinklig zueinander verlaufen, und

daß die Gelenke (7, 7 a und 8, 8 a) durch Sollbiegestellen mit einem rechteckigen Querschnitt gebildet sind, wobei die Längsseiten des Querschnitts parallel zur jeweiligen Schwenkachse (9, 9 a bzw. 10, 10 a) verlaufen.

2. Fahrzeugscheinwerfer nach Anspruch 1,
dadurch gekennzeichnet,
daß die rechtwinklig zueinander verlaufenden Schwenkachsen (9 und 10) in einem Abstand zueinander angeordnet sind.

3. Fahrzeugscheinwerfer nach Anspruch 2,
dadurch gekennzeichnet,
daß das ortsfeste und das bewegliche Befestigungselement (4 und 2) durch einen zylinderförmigen Block (6) verbunden sind, der im mittleren Abschnitt zwei im Abstand zueinander angeordnete, im Querschnitt geschwächte Abschnitte (7 und 8) aufweist, die die scharnierartigen Gelenke bilden.

4. Fahrzeugscheinwerfer nach Anspruch 1,
   dadurch gekennzeichnet,
   daß die Verbindung des ortsfesten mit dem beweglichen Befestigungselement (4 a und 2 a) eine Abwinklung (17) um
   90° aufweist und jeder Winkelschenkel einen Abschnitt
   (7 a und 8 a) mit geschwächtem Querschnitt aufweist, der
   rechteckig ausgebildet ist und die Längsseiten der beiden
   rechteckigen Querschnitte rechtwinklig zueinander verlaufen.

5. Fahrzeugscheinwerfer nach einem oder mehreren der vorstehenden Ansprüche,
   dadurch gekennzeichnet,
   daß die Verbindung des ortsfesten mit dem beweglichen Befestigungselement (4 a und 2 a) eine Abwinklung (17) um
   90° aufweist und einer der Winkelschenkel einen Abschnitt
   (8 a) mit geschwächtem, rechteckig ausgebildetem Querschnitt aufweist und die Verbindung der beiden Winkelschenkel kneifzangenartig ausgeführt ist und vorzugsweise
   die Verbindung (19) der beiden Winkelschenkel im Querschnitt geschwächt ist und die Längsseiten der geschwächten Querschnitte rechtwinklig zueinander verlaufen.

6. Fahrzeugscheinwerfer nach einem oder mehreren der vorstehenden Ansprüche,
   dadurch gekennzeichnet,
   daß das ortsfeste und/oder bewegliche Befestigungselement
   (4 a) mindestens ein Befestigungsloch und einen angeformten, in das Aufnahmeteil bzw. den Reflektorrand eingreifenden Zapfen aufweist.

7. Fahrzeugscheinwerfer nach einem oder mehreren der vorstehenden Ansprüche,
   dadurch gekennzeichnet,
   daß ein Befestigungselement (4 a und 2 a) an den Seitenwandungen einer Vertiefung oder an Ansätzen des Reflektors
   und/oder des Aufnahmeteils anliegt.

8. Fahrzeugscheinwerfer nach einem oder mehreren der vorstehenden Ansprüche, dadurch gekennzeichnet, daß das ortsfeste und/oder bewegliche Befestigungselement (4 a, 2 a) plattenförmig ausgebildet ist.

9. Fahrzeugscheinwerfer nach Anspruch 8, dadurch gekennzeichnet, daß die Befestigungsplatte rechteckförmig ausgebildet ist und mittig ein in die Reflektor- und/oder Aufnahmewandung eingreifender Ansatz (15) angeformt ist und seitlich neben dem Ansatz (15) je eine Befestigungsbohrung (16) eingebracht ist.

10. Fahrzeugscheinwerfer nach einem oder mehreren der vorstehenden Ansprüche, dadurch gekennzeichnet, daß das ortsfeste und das bewegliche Befestigungselement (4 und 2) an dem Aufnahmeteil bzw. dem Reflektor bajonettartig befestigt sind.

FIG.1

X

FIG.2
Ansicht X

0058312

FIG.3

FIG.4
Schnitt A-A

FIG.6

FIG.5

FIG.7

FIG.8

# 0058312

EUROPÄISCHER RECHERCHENBERICHT

Europäisches Patentamt

Nummer der Anmeldung

EP 82 10 0438

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | FR-A-2 479 753 (CIBIE PROJECTEURS) <br> * Figuren 1,2 * | 1 | B 60 Q 1/04 |
| A | FR-A-2 404 166 (WESTFALISCHE METALLINDUSTRIE K.G. HUECK UND CO.) <br> * Figuren 1-3 * | 1 | |

---

RECHERCHIERTE SACHGEBIETE (Int. Cl. 3)

B 60 Q 1/04
B 60 Q 1/06
B 60 Q 1/18
B 60 Q 1/20

Der vorliegende Recherchenbericht wurde für alle Patentansprüche erstellt.

| Recherchenort | Abschlußdatum der Recherche | Prüfer |
|---|---|---|
| DEN HAAG | 04-05-1982 | ONILLON C.G.A. |

EPA Form 1503 03 82